# EUROPÄISCHE PATENTSCHRIFT

(11) **EP 2 609 978 B1**
(45) Veröffentlichungstag und Bekanntmachung des Hinweises auf die Patenterteilung: **06.02.2019**
(21) Anmeldenummer: 12192702.4
(22) Anmeldetag: 15.11.2012
(51) Int. Cl.: B01D 29/23

(54) **Filterelement mit einer zylindrischen Grundform**
Filter element with a cylindrical basic form
Élément de filtre avec une forme de base cylindrique

(30) Priorität: 27.12.2011 DE 102011089971
(43) Veröffentlichungstag der Anmeldung: 03.07.2013
(73) Patentinhaber: ROBERT BOSCH GMBH, 70442 Stuttgart (DE)
(72) Erfinder: Sancho De Castro, Manuel, 19209 Villanueva de la Torre (ES); Garcia Benitez, Cesar, 70193 Stuttgart (DE); Juara Ropero, Candido, 28805 Alcala de Henares (Madrid) (ES)

(56) Entgegenhaltungen:
- EP-A1- 1 964 600
- DE-A1- 10 235 275
- US-A- 5 250 179

## Beschreibung

### Stand der Technik

Die Erfindung betrifft ein Filterelement, insbesondere für Kraftstoff oder Harnstoff, mit einer zylindrischen Grundform zum Aufnehmen eines Filtermediums. Ferner betrifft die Erfindung die Verwendung eines solchen Filterelements bei einer Filtereinrichtung für ein Kraftstoffversortungssystem.

Filtereinrichtungen von Kraftstoffversorgungssystemen moderner Kraftfahrzeuge, wie beispielsweise Personenkraftwagen oder Lastkraftwagen, kommt insbesondere die Funktion zu, das durch die Filtereinrichtung geführte Fluid von Schmutzpartikeln zu reinigen. Um diese Funktionen zu verwirklichen, ist es bekannt, ein Filterelement insbesondere in Form einer Filterpatrone in einem Filtergehäuse anzuordnen. Das Filtergehäuse ist in der Regel mit einem zylinderförmigen Filtergehäusebecher gestaltet, der mit einem Filtergehäusedeckel fluiddicht verschlossen ist.

Der Filtergehäusedeckel weist zum Zu- und Abführen eines zu filtrierenden Fluids mehrere Anschlüsse bzw. Anschlussstutzen auf. Durch diese Anschlüsse hindurch wird der Kraftstoff bzw. Harnstoff derart durch das Filterelement hindurchgeleitet, dass die im Fluid mitgeführten Schmutzpartikel sowie mitgeführtes Wasser am Filtermedium zurückgehalten und abgeschieden werden. Beim Durchleiten des zu filternden Fluids durch das Filtermedium mit invertierter Flussrichtung und insbesondere auch beim Rückspülen von Fluid zum Reinigen des Filtermediums ist das strömende Fluid hohen Drücken ausgesetzt, die zu einer hohen Spannungsbelastung des Filtermediums und insbesondere von Zylinderwänden bzw. Wandflächen des Filtermediums führen.

Aus der US 5,250,179 ist ein zylindrisches Filterelement für einen Flüssigkeitsfilter bekannt.

Aus der EP 1 964 600 A1 ist ein Flüssigkeitsfilter mit einem Filterelement bekannt.

Aus der DE 102 35 275 A1 sind ein Filterelement und ein Verfahren zu dessen Herstellung bekannt.

### Offenbarung der Erfindung

Erfindungsgemäß ist ein Filterelement, insbesondere für Kraftstoff oder Harnstoff, mit einer zylindrischen Grundform zum Aufnehmen eines Filtermediums geschaffen, bei dem eine das Filtermedium umgreifende Buchse vorgesehen ist.

Die erfindungsgemäße Buchse ist als ein Bauteil gestaltet, welches das Filtermedium außenseitig umgreift und dabei insbesondere als ein vollumfänglicher umschließender Ring gestaltet ist. Die Buchse ist insbesondere über das Filtermedium geschoben. Das Filtermedium ist so mit der Buchse außenseitig verstärkt und versteift und kann daher bei einer Beanspruchung des Filtermediums aufgrund von Innendruck dieser Beanspruchung gut standhalten. Insbesondere kann das Filtermedium selbst daher aus dünnerem Material hergestellt sein. Die Buchse umgreift das Filtermedium besonders vorteilhaft eng, so dass sich bereits bei einer nur geringen Weitung bzw. Dehnung des Filtermediums aufgrund von Innendruck der erfindungsgemäße Stützeffekt mittels der Buchse einstellt. Die Buchse verstärkt und versteift das Filtermedium also mechanisch, lässt es aber zugleich zu, dass sich das Filtermedium im Inneren der Buchse zumindest geringfügig verformen kann. Mit dieser Verformung kann das Filtermedium Wärmedehnungen und Druckdehnungen ausgleichen, ohne dass es zu einer Überbeanspruchung des Materials des Filtermediums kommen kann. Insbesondere kann das Filtermedium kleine Dehnbewegungen ausführen, während es zugleich bei einer großen thermischen oder hydraulischen Belastung gegen Überdehnung seines Materials geschützt ist.

Das Filtermedium ist mit einer zylindrischen äußeren Mantelfläche gestaltet und die Buchse an der Mantelfläche außen permanent anliegend gestaltet. Auf diese Weise ist ein Kontakt und damit eine mechanische Verbindung zwischen der Mantelfläche und der Buchse hergestellt, wodurch die Buchse und die Mantelfläche relativ zueinander positioniert und gehalten sind.

Die Buchse ist mit mindestens einem Federelement gestaltet, welches gegen das Filtermedium, insbesondere dessen Mantelfläche, federnd vorgespannt angelegt ist. Das Federelement vergrößert aufgrund eines vergleichsweise großen Federwegs die möglichen Toleranzen zwischen dem Filtermedium und der Buchse. Damit hält das mindestens eine Federelement die Buchse relativ zum Filtermedium, auch wenn dieses einer besonders hohen thermischen oder hydraulischen Wechselbelastung unterworfen ist.

Über den Umfang der Buchse sind vorteilhaft drei Federelement insbesondere gleichmäßig verteilt angeordnet. Mit drei Federelementen ist eine eindeutige statische Anordnung des Filtermediums in der Buchse geschaffen und zugleich ist gewährleistet, dass jedes der Federelemente der gleichen mechanischen Last ausgesetzt ist.

Die Buchse ist ferner bevorzugt zylindrisch gestaltet. Mindestens ein Federelement ist an einem axialen Ende der Zylinderform der Buchse und mindestens ein Federelement ist am gegenüberliegenden Ende der Zylinderform der Buchse angeordnet. Die derart angeordneten Federelemente sind über die axiale Erstreckung der Buchse verteilt und schaffen damit eine Längsausrichtung des Filtermediums in der Buchse. Ferner stellt der vorteilhaft erzielte weite axiale Abstand zwischen den Federelementen sicher, dass das Filtermedium an weit entfernten Bereichen von den Federelementen gegriffen wird. Dadurch ergibt sich eine gute Kraftverteilung über die Fläche des Filtermediums hinweg.

An den beiden gegenüberliegenden Enden der erfindungsgemäßen Buchse sind vorteilhaft jeweils mehrere Federelemente über den Umfang der Buchse verteilt angeordnet und die Federelemente sind an einem Ende in Umfangsrichtung zwischen den Federelementen am anderen Ende angeordnet. Besonders bevorzugt sind die Federelement an einem Endbereich mittig zwischen den Federelementen am anderen Endbereich angeordnet. Auch mit dieser Verteilung der Federelemente kann die Krafteinwirkung der Buchse auf das Filtermedium weiter homogen verteilt werden.

Das mindestens eine Federelement ist bevorzugt als Blattfeder gestaltet und insbesondere die Blattfedern an den beiden axialen Enden der Buchse sind axial entgegengesetzt gerichtet, insbesondere nach außen gerichtet, an der restlichen Buchse federnd befestigt. Die derart gestaltete Buchse kann mit ihren Blattfedern als Stanzteil kostengünstig hergestellt werden und weist zugleich eine besonders geringe radiale Erstreckung auf.

Die Blattfedern sind ferner vorteilhaft mit einem ersten Rastelement und das Filtermedium mit einem zugehörigen zweiten Rastelement zum Herstellen einer formschlüssigen Rastverbindung zwischen Buchse und Filtermedium ausgebildet. Die Rastverbindung schafft eine formschlüssige Kopplung von Filtermedium und Buchse, mittels der das Filtermedium auf einfache und zugleich stabile Weise relativ zur Buchse positioniert ist.

Das erste Rastelement ist dabei besonders bevorzugt mit einem an der Blattfeder angeformten Nocken gestaltet. Der Nocken lässt sich mittels eines Stanzverfahrens insbesondere an einer vorteilhaft aus Metall hergestellten Buchse weitgehend kostenneutral herstellen.

Die Erfindung ist ferner auf eine Verwendung eines derartigen Filterelements an einer Filtereinrichtung für ein Kraftstoffversorgungssystem eines Kraftfahrzeugs gerichtet.

Nachfolgend wird ein Ausführungsbeispiel der erfindungsgemäßen Lösung anhand der beigefügten schematischen Zeichnungen näher erläutert. Es zeigt:
- Fig. 1: einen Längsschnitt eines Ausführungsbeispiels eines erfindungsgemäßen Filterelements mit einer Buchse,
- Fig. 2: eine perspektivische Ansicht einer Buchse gemäß Fig. 1,
- Fig. 3: einen Ausschnitt der Ansicht gemäß Fig. 1 und
- Fig. 4: einen Längsschnitt des Filterelements gemäß Fig. 1 in einem zugehörigen Filtergehäuse.

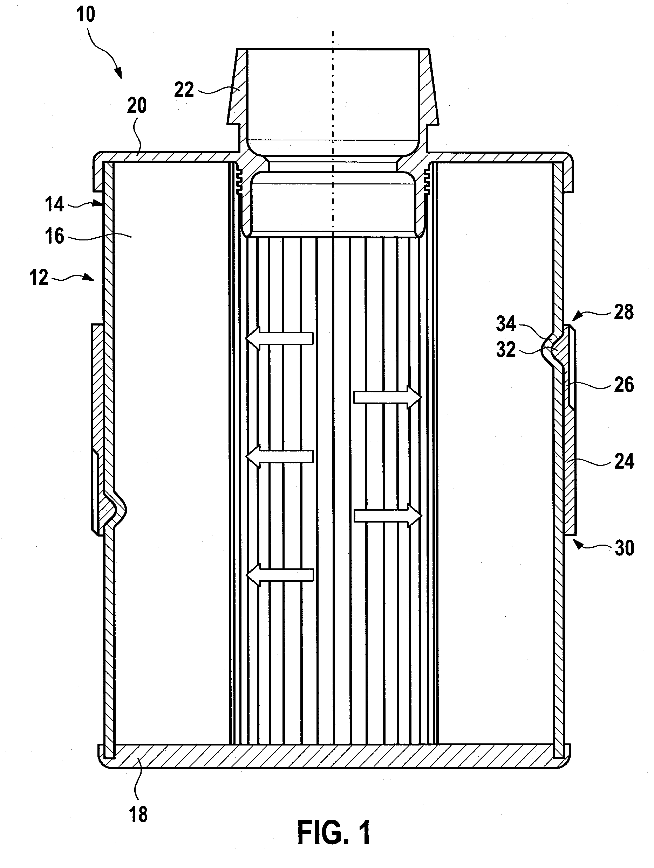

In den Fig. 1 bis 3 ist eine Filterelement 10 zum Filtern von Kraftstoff eines weiter nicht dargestellten Kraftstoffversorgungssystems eines Kraftfahrzeugs veranschaulicht.

Das Filterelement 10 ist mit einer im Wesentlichen kreiszylindrischen Grundform 12 einer Filterpatrone gestaltet, die ein hohlzylindrisches und dabei in Form einer Ziehharmonika über den Umfang verteilt angeordnetes Filtermedium 14 mit in Längsrichtung ausgerichteten Filterwandflächen 16 umfasst. Die Filterwandflächen 16 des Filtermediums 14 sind an ihrem bezogen auf Fig. 1 unteren Ende mit einem Patronenboden 18 und an ihrem oberen Ende mit einem Patronendeckel 20 fluiddicht abgeschlossen.

An dem Patronendeckel 20 befindet sich ein Auslass 22 in Form eines Rohrstutzens, durch den zu reinigendes Fluid, welches von außen kommend durch das Filtermedium 14 geströmt ist, das Filterelement 10 verlassen kann. Umgekehrt kann zum Rückspülen des Filterelements 10 Fluid durch den Auslass 22 in das Innere des Filterelements 10 gedrängt werden und dann unter Erzeugung von Innendruck durch das Filtermedium 14 nach außen abströmen.

Beim derartigen Durchströmen des Filtermediums 14 besteht im Inneren teilweise ein recht hoher Druck. Um die Filterwandflächen 16 gegenüber diesem Innendruck abzustützen und zu versteifen, sind die Filterwandflächen 16 außen, d.h. an ihrem jeweils radial äußeren Rand, von einer kreiszylindrischen, Buchse 24 in Gestalt eines Rohrabschnitts umgriffen.

Die Buchse 24 umgibt das Filtermedium 14 dabei nicht vollflächig anliegend, sondern weist insgesamt sechs Federelemente 26 auf, die gegen die sich aus einer Mehrzahl Längsstreifen ergebende äußere Mantelfläche des Filtermediums 14 federnd vorgespannt sind.

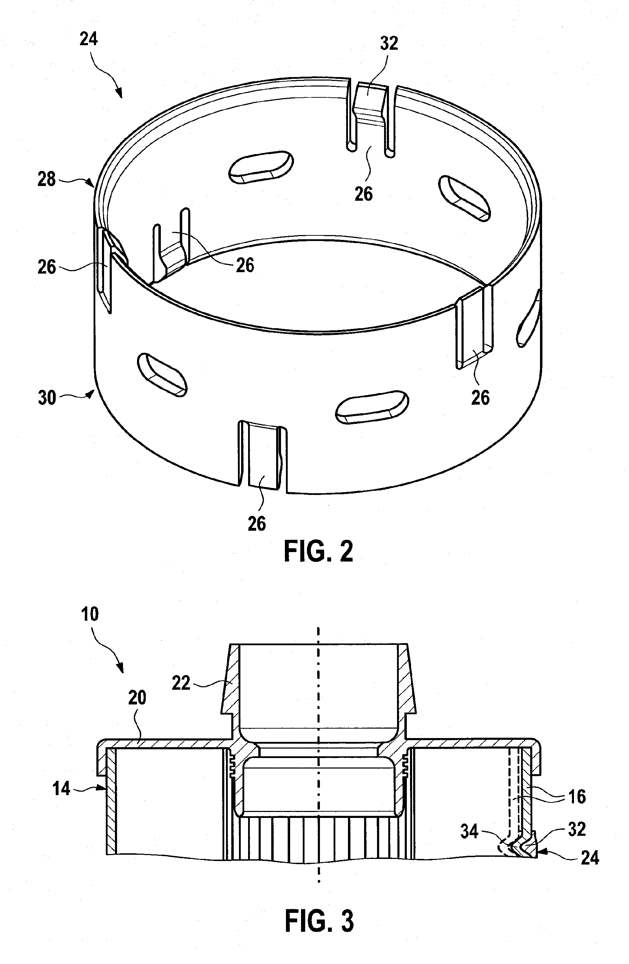

Die Federelemente 26 gleichen damit Formänderungen der Filterwandflächen 16 aus (siehe Fig. 3) die diese bei geringem Innendruck (Fig. 3, innere Kontur der Filterwandfläche 16 als gestrichelte Linie dargestellt) gegenüber einem hohen Innendruck (Fig. 3, äußere Kontur der Filterwandfläche 16 als Volllinie dargestellt) erfährt.

Dabei kann sich das Filtermedium 12 im Inneren der Buchse 24 zumindest geringfügig verformen und dadurch ohne Materialschädigung Wärmedehnungen und Druckdehnungen ausgleichen.

Die Federelemente 26 halten zugleich selbst trotz derartigerer Wärmedehnungen oder Druckdehnungen den mechanischen Kontakt zwischen den Filterwandflächen 16 und der Buchse 24 aufrecht, wodurch die Buchse 24 und das Filtermedium 14 relativ zueinander positioniert bleiben.

Über den Umfang der Buchse 24 sind an deren erstem, oberen Endbereich 28 und deren zweitem, unteren Endbereich 30 jeweils drei Federelemente 26 gleichmäßig verteilt angeordnet. Die Federelemente 26 am oberen Endbereich 28 befinden sich dabei in Umfangsrichtung betrachtet jeweils mittig zwischen den Federelementen 26 am unteren Endbereich 30. Mit dieser Anordnung der insgesamt sechs Federelemente 26 ist eine eindeutige statische Lagebestimmung des Filtermediums 14 in der Buchse 24 bei großflächiger Lastverteilung geschafften und zugleich ist gewährleistet, dass jedes der Federelement 26 der gleichen mechanischen Last ausgesetzt ist.

Jedes Federelement 26 ist als Blattfeder gestaltet, die mit einem Ende ihrer Längserstreckung an der restlichen Buchse 24 ortsfest und zugleich federnd angebracht ist. Das andere, freie Ende der Blattfeder ist in Längsrichtung von der restlichen Buchse 24 weg gerichtet ausgerichtet. Die Buchse 24 ist dabei mit ihren Blattfedern als Stanzteil aus einem metallischen, dünnwandigen Rohrabschnitt hergestellt worden.

An den einzelnen, jeweils als Blattfeder gestalteten Federelementen 26 befindet sich am freien Ende je ein erstes Rastelement 32 in Form eines Nockens. Das erste Rastelement 32 wirkt mit einem zweiten, am Filtermedium 14 ausgebildeten Rastelement 34 in Form einer Vertiefung zusammen. Auf diese Weise ist die Buchse 24 mittels der Rastelemente 32 und 34 am Filtermedium 14 selbst bei Formänderung von diesem formschlüssig gehalten.

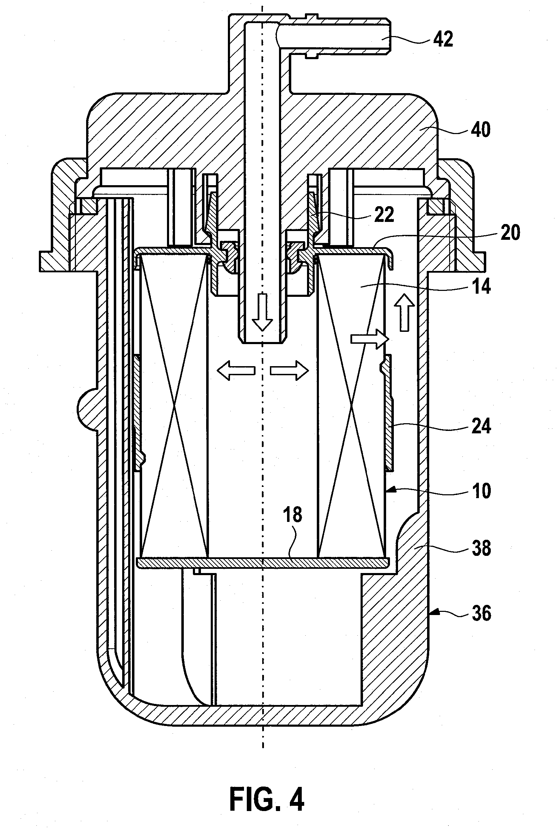

In der Fig. 4 ist die Anordnung eines derartigen Filterelements 10 in einem zugehörigen Filtergehäuse 36 dargestellt. Das Filtergehäuse 36 ist mit einem Gehäusebecher 38 gestaltet, der oben von einem Gehäusedeckel 40 verschlossen ist. An dem Gehäusedeckel 40 ist ein gewinkelter Anschluss 42 ausgebildet, der zu dem Auslass 22 des Filterelements 14 geführt ist. Wenn insbesondere beim Rückspülen oder beim Betrieb des Filterelements 10 mit umgekehrter Beschickungsrichtung in diesen Anschluss 42 Fluid eingeleitet wird, so steigt im Inneren des Filterelements 10 der Druck entsprechend und die oben erläuterte Buchse 24 entwickelt entsprechend ihre gewünschte stützende Wirkung.

## Patentansprüche

1. Filterelement (10), insbesondere für Kraftstoff oder Harnstoff, mit einer zylindrischen Grundform (12) zum Aufnehmen eines Filtermediums (14), bei der eine das Filtermedium (14) umgreifende Buchse (24) vorgesehen ist
bei der das Filtermedium (14) mit einer zylindrischen äußeren Mantelfläche gestaltet ist und die Buchse (24) an der Mantelfläche außen anliegend gestaltet ist,
bei der die Buchse (24) mit mindestens einem Federelement (26) gestaltet ist, welches gegen das Filtermedium (14), insbesondere dessen Mantelfläche, federnd vorgespannt angelegt ist.

2. Filterelement nach Anspruch 1, bei der über den Umfang der Buchse (24) verteilt drei Federelemente (26) insbesondere gleichmäßig verteilt angeordnet sind.

3. Filterelement nach einem der vorhergehenden Ansprüche, bei der die Buchse (24) zylindrisch gestaltet ist und mindestens ein Federelement (26) an einem axialen Endbereich (28) der Zylinderform der Buchse (24) und mindestens ein Federelement (26) am gegenüberliegenden Endbereich (30) der Zylinderform der Buchse (24) angeordnet ist.

4. Filterelement nach Anspruch 3, bei der an den beiden gegenüberliegenden Enden (28, 30) jeweils mehrere Federelemente (26) über den Umfang der Buchse (24) verteilt angeordnet sind und die Federelemente (26) an einem Endbereich (28) in Umfangsrichtung zwischen den Federelementen (26) am anderen Endbereich (30) angeordnet sind.

5. Filterelement nach einem der vorhergehenden Ansprüche, bei der das mindestens eine Federelement (26) als Blattfeder gestaltet ist und insbesondere die Blattfedern an den beiden axialen Endbereichen (28, 30) der Buchse (24) axial entgegengesetzt, insbesondere nach außen, gerichtet an der restlichen Buchse (24) federnd befestigt sind.

6. Filterelement nach einem der vorhergehenden Ansprüche, bei der das mindestens eine Federelement (26) mit einem ersten Rastelement (32) und das Filtermedium (14) mit einem zugehörigen zweiten Rastelement (34) zum Herstellen einer formschlüssigen Rastverbindung zwischen der Buchse (24) und dem Filtermedium (14) ausgebildet sind.

7. Filterelement nach Anspruch 6, bei der das erste Rastelement (32) mit einem an dem Federelement (26) angeformten Nocken gestaltet ist.

8. Verwendung eines Filterelements (10) nach einem der Ansprüche 1 bis 7 an einer Filtereinrichtung für ein Kraftstoffversorgungssystem eines Kraftfahrzeugs.

## Claims

1. Filter element (10), in particular for fuel or urea, having a cylindrical main shape (12) for receiving a filter medium (14), in which a sleeve (24) which engages around the filter medium (14) is provided, in which the filter medium (14) is designed with a cylindrical outer circumferential face and the sleeve (24) is designed so as to bear against the circumferential face on the outside, and in which the sleeve (24) is designed with at least one spring element (26) which is placed against the filter medium (14), in particular its circumferential face, in a manner which is prestressed resiliently.

2. Filter element according to Claim 1, in which, over the circumference of the sleeve (24), three spring elements (26) are arranged, in particular distributed uniformly.

3. Filter element according to either of the preceding claims, in which the sleeve (24) is of cylindrical design, and at least one spring element (26) is arranged at an axial end region (28) of the cylindrical shape of the sleeve (24), and at least one spring element (26) is arranged at the opposite end region (30) of the cylindrical shape of the sleeve (24).

4. Filter element according to Claim 3, in which in each case a plurality of spring elements (26) are arranged distributed over the circumference of the sleeve (24) at the two opposite ends (28, 30), and the spring elements (26) at one end region (28) are arranged between the spring elements (26) at the other end region (30) in the circumferential direction.

5. Filter element according to one of the preceding claims, in which the at least one spring element (26) is designed as a leaf spring, and, in particular, the leaf springs at the two axial end regions (28, 30) of the sleeve (24) are fastened resiliently to the remaining sleeve (24) in a way which is directed in an axially opposite, in particular outward manner.

6. Filter element according to one of the preceding claims, in which the at least one spring element (26) is configured with a first latching element (32) and the filter medium (14) is configured with an associated second latching element (34) in order to produce a positively locking connection between the sleeve (24) and the filter medium (14).

7. Filter element according to Claim 6, in which the first latching element (32) is designed with a cam which is integrally formed on the spring element (26).

8. Use of a filter element (10) according to one of Claims 1 to 7 on a filter device for a fuel supply system of a motor vehicle.

## Revendications

1. Élément de filtre (10), en particulier pour carburant ou urée, présentant une forme de base cylindrique (12) servant à recevoir un milieu filtrant (14),
dans lequel une douille (24) enveloppant le milieu filtrant (14) est prévue,
dans lequel le milieu filtrant (14) est conçu de manière à présenter une surface d'enveloppe extérieure cylindrique et la douille (24) est conçue de manière à s'appliquer à l'extérieur contre la surface d'enveloppe,
dans lequel la douille (24) est conçue de manière à présenter au moins un élément ressort (26), lequel est appliqué de manière précontrainte élastiquement contre le milieu filtrant (14), en particulier contre sa surface d'enveloppe.

2. Élément de filtre selon la revendication 1,
dans lequel trois éléments ressorts (26) sont disposés de manière répartie sur la périphérie de la douille (24), en particulier de manière répartie uniformément.

3. Élément de filtre selon l'une quelconque des revendications précédentes,
dans lequel la douille (24) est de forme cylindrique et au moins un élément ressort (26) est disposé au niveau d'une zone d'extrémité axiale (28) de la forme cylindrique de la douille (24) et au moins un élément ressort (26) est disposé au niveau de la zone d'extrémité opposée (30) de la forme cylindrique de la douille (24).

4. Élément de filtre selon la revendication 3,
dans lequel plusieurs éléments ressorts (26) sont disposés respectivement de manière répartie sur la périphérie de la douille (24) au niveau des deux extrémités opposées (28, 30) et les éléments ressorts (26) au niveau d'une zone d'extrémité (28) sont disposés, dans la direction périphérique, entre les éléments ressorts (26) au niveau de l'autre zone d'extrémité (30).

5. Élément de filtre selon l'une quelconque des revendications précédentes,
dans lequel ledit au moins un élément ressort (26) est conçu sous forme de ressort à lame et en particulier les ressorts à lame sont, au niveau des deux zones d'extrémité axiales (28, 30) de la douille (24), fixés élastiquement au reste de la douille (24) de manière orientée de façon opposée axialement, en particulier vers l'extérieur.

6. Élément de filtre selon l'une quelconque des revendications précédentes,
dans lequel ledit au moins un élément ressort (26) est doté d'un premier élément d'encliquetage (32) et le milieu filtrant (14) est doté d'un deuxième élément d'encliquetage (34) associé pour réaliser une liaison par encliquetage à complémentarité de forme entre la douille (24) et le milieu filtrant (14).

7. Élément de filtre selon la revendication 6,
dans lequel le premier élément d'encliquetage (32) est conçu de manière à présenter un ergot formé sur l'élément ressort (26).

8. Utilisation d'un élément de filtre (10) selon l'une quelconque des revendications 1 à 7 sur un dispositif de filtration pour un système d'alimentation en carburant d'un véhicule automobile.
